Europäisches Patentamt

European Patent Office

Office européen des brevets

(11) Publication number: **0 195 760**
**A1**

## (12) EUROPEAN PATENT APPLICATION

(21) Application number: **86850047.1**

(22) Date of filing: **13.02.86**

(51) Int. Cl.⁴: **A 01 G 13/02**

(30) Priority: **14.02.85 SE 8500694**

(43) Date of publication of application:
**24.09.86 Bulletin 86/39**

(84) Designated Contracting States:
**CH DE FR GB IT LI NL SE**

(71) Applicant: **IHAB**
**P.O. Box 71**
**S-244 00 Kävlinge(SE)**

(72) Inventor: **Sandin, Håkan**
**10 Mårtensgatan**
**S-24400 Kävlinge(SE)**

(74) Representative: **Onn, Thorsten et al,**
**AB STOCKHOLMS PATENTBYRA Box 3129**
**S-103 62 Stockholm(SE)**

(54) **Devices for laying out a soil-covering material.**

(57) Being intended to be connected to a tractor, the device is divided into an upper frame (18, 19) supporting a ploughing means (28) and a store for rolls of a soil covering material, which both require power and, therefore, are connected to the three-point suspension of the tractor to be operated by this, and a lower frame (4, 8) supporting the laying-out mechanism and connected to an articulated coupling (9). At its other end the lower frame (4, 8) is supported on the ground by means of a support wheel (10). The roll (1) from which the soil-covering material is rolled out, is rolling directly on the ground surface and can adapt itself completely to the existing ground contour.

Fig. 1

EP 0 195 760 A1

This invention relates to a device for laying out a soil-covering material (also called mulches) for planting purposes.

It is previously known to use laying-out means connected to a carrier, usually a tractor, for laying out soil-covering materials. In the known devices of this type irregularities in the laid-out material easily occur, also, due to irregularities of the soil so that the material does not cover the soil in the intended way. These problems are of a different kind and are described more closely below.

If the laying-out means is suddenly turned laterally, even by a very small turn, big folds are immediately formed in the material web which is quite stiff laterally but quite flexible vertically. If the laying-out means is directly attached to the three-point suspension of the tractor the normal steering movements of the tractor are enlarged so that they will be unacceptable in the point where the soil-covering material leaves the roll onto which it is rolled. It is possible to articulate between the tractor and the laying-out means but if the plough members are attached to the laying-out means the often very great ploughing forces which appear irregularly have the effect that the whole laying-out means is suddenly displaced laterally, particularly on a stony soil.

When anchoring the material web it is desirable not to cover with soil further inside of the edge of the web than necessary in order to resist wind forces. In this way a maximal function is obtained from the covered area. This makes great demands on the evenness and continuity of the soil. In all known designs plough means of different types are attached to the frame of the laying out means, at least one on each side. The plouging depth and thus the plough soil per running meter is controlled by a support wheel, placed at the best close to the ploughing means but never immediately at this. If such a support wheel is now running on a plane smooth soil the ploughing means will take up an even, continuous line of soil. If, however, the plough happens to pass a bump or a pit it will release the soil and the material web will be non-anchored or slightly anchored just there. If, on the other hand, the support wheel enters a pit a too heavy line of soil will be placed on the web edge as the ploughing means is allowed to go more deeply.

When laying out a soil-covering material, especially over great areas, a roll exchange is also awkward and toilsome in known devices. The weight of a roll is about 40 kgs or more. In some cases known devices can be provided with one single reserve roll which, moreover, due to its weight, can be moved with difficulty to the roll-out position of the machine by one single person. Carrying up new rolls and help with exchange of rolls require one person and suitable transport vehicles working full time and will therefore increase working costs twice.

It is therefore the object of this invention to provide a device of the kind indicated above in which the above--mentioned problems of the previously known devices can be eliminated.

The above-mentioned object of the invention has been achieved in that the invention has been given the characteristic features defined in the claims.

The advantages obtained by a device of the invention are i.a. as follows:

The roll is rolling directly on the soil surface and adapts itself completely to the existing soil contour.

The moving mechanism of the rolls and the roll store enable a rapid and easy exchange of rolls and roll handling as compared with methods used so far. The store should hold at least 4-10 rolls and these can be transferred semi--automatically to the roll-out position of the machine by means of gravity and a simple stop member. The roll is anchored rapidly and easily in the roll-out position by moving a loose axle through an axle-holding means and the roll.

The plough members operate according to "the cheese slicer principle" which gives an as even transfer of soil as possible. At devices where the working depth of the ploughing means are guided by support wheels at a relatively great distance from the place being ploughed it is not possible to control the ploughing depth on an uneven soil. Irrespective of irregularities in the soil surface the plough member of the invention will, on the other hand, always plough in the depth determined by its supporting surface and, consequently, the swath of soil over the edge of the material web will be even and unbroken.

The material web is sensitive to lateral movements of the laying-out means. These lateral movements are minimized in that the lower frame with the roll is drawn from an articulated coupling located as close to the centre of the rear axle of the tractor as possible where the steering movements of the tractor have a slight side effect. Support wheels stabilize against lateral movements from the tractor by the advantageous lever ratio sideways between coupling, roll and support wheel.

The ploughing forces which can be considerable are taken up directly by the three-point suspension of the tractor via the upper frame and cannot actuate the lower frame and the lateral laying-out procedure.

The construction of the device enables that more than one laying-out unit (odd number, e.g. 3,5,7) are connected after the same tractor vehicle via a common yoke unit provided with wing wheels.

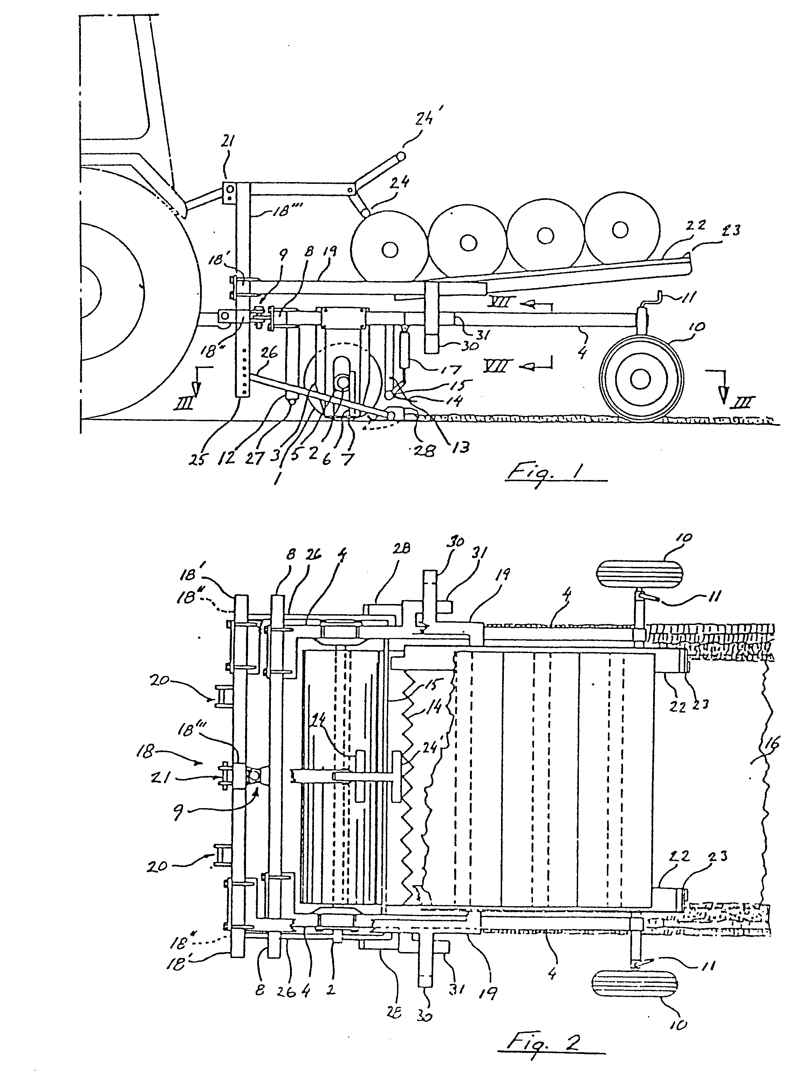

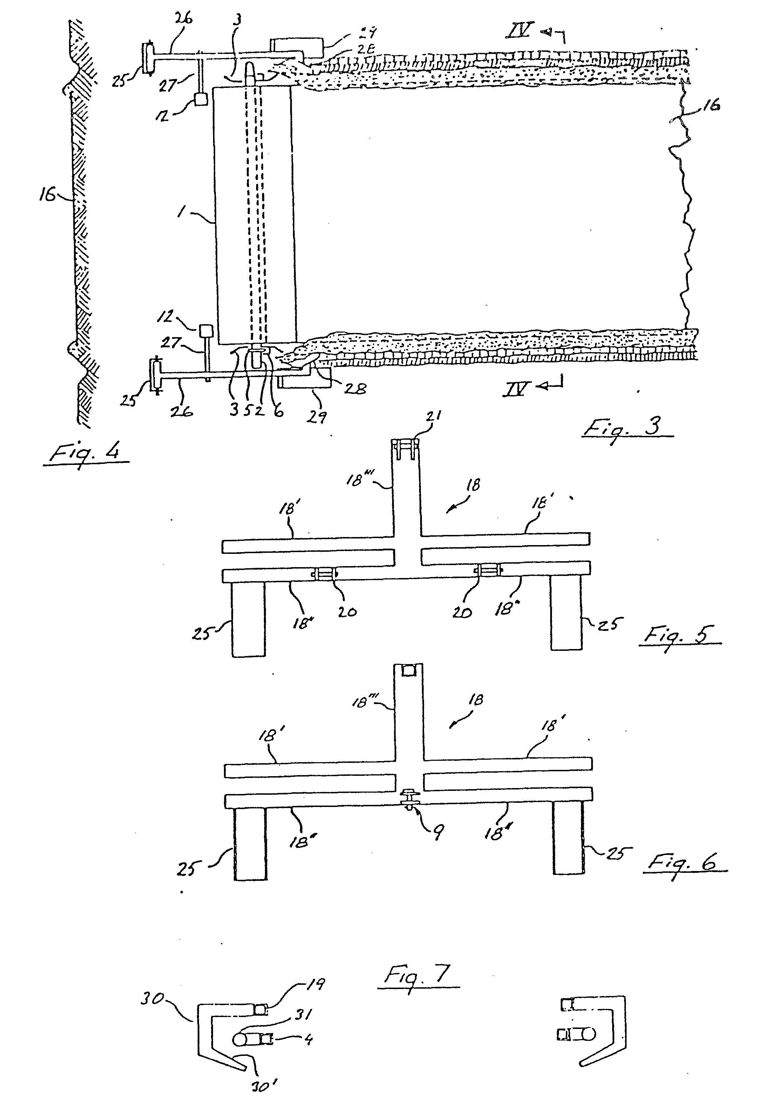

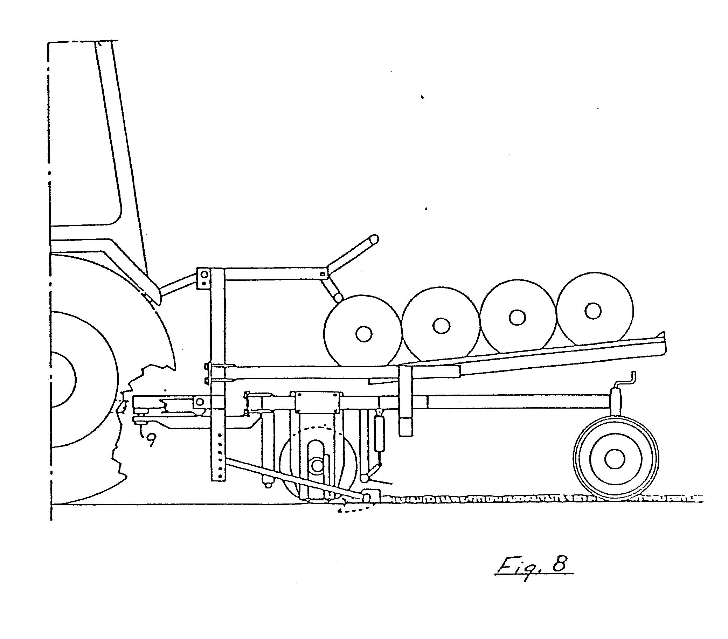

The invention will now be described more in detail by way of an illustrative example shown on the drawing, where Fig. 1 is a lateral view of the device according to the invention, Fig. 2 is a top plan view of the device, Fig. 3 is a sectional top plan view taken along the horizontal plane IIIIII in Fig. 1, Fig. 4 is a cross section IV-IV according to Fig. 3 of the finished covered cultivating bed, Figs. 5 and 6 show the respective sides of the front portion, Fig. 7 shows in a cross section of the vertical plane VII-VII in Fig. 1 a device for centering the lower portion of the laying-out means relative to its upper portion, and Fig. 8 is a view corresponding to Fig. 1 of a modified articulated coupling moved more closely towards the tractor.

In Figs. 1, 2 and 3 a roll 1 of a soil-covering material, paper or plastic, is shown which is rotatably connected by means of an axle 2 running through its centre to two opposed axle supports 3 which are detachably attached to each their opposed frame side portion 4. A collar 5 on the axle 2 together with a locking angle means 6 prevents the axle 2 from being moved axially out of the axle supports 3. An

underlying flat bar 7 being part of the each of the axle supports 3 prevents the axle 2 and consequently the roll 1 from falling down and out of the axle opening of the axle supports 3 when the whole device is being lifted. The surfaces of the axlet supports facing the roll 1 are intended to guide the roll 1 in axial direction. The arrangement described above is intended to maintain the roll 1 in a continuous and direct contact with the soil when the material web 16 is being rolled out irrespective of normally occurring irregularities in the soil surface. The side portions 4 of the frame are detachably attached to a frame front portion 8 in such a way that they can be moved apart or together for adaptation to the current width of the roll 1 and form together with the frame front portion 8 the lower frame 4,4,8 of the device.

At the centre of the frame front portion 8 one half of a coupling 9 is attached fixing the front central portion of the frame 4,4,8 longitudinally, laterally and vertically, simultaneously as it allows a certain turning and swinging motion of the lower frame 4,4,8 in all directions. In the rear end of each frame side portion 4 there is a support wheel 10 which can be adjusted vertically by means of a set screw 11 provided with a crank. Alternatively, the support wheels can be made without height adjusting meansmounted in a definite vertical position relative to the lower frame 4,4,8. Moreover, the wheels 10 are mounted so that they can be adjusted transversely to the direction of travel in order to obtain a suitable track. There are two fixed stops 12 at the front ends of the frame side portions 4 intended to guide a new roll 1 when placed in the roll-out position on the ground plane. In each frame side portion 4 there is attached a holding means 13. These holding means carry between themselves a knife 14 with ground pointed teeth which is lowered towards the material web 61 at turning around the shaft 15, and will perforate and tear this off. Turning is accomplished in that a hydraulic cylinder 17 coupled to the hydraulic system of the tractor actuates a lever connected to one end of the shaft 15. Alternatively, turning can be carried out manually directly by means of a lever or via a lever and an operating cable of the type "Teleflex" from within the tractor cabin. Furthermore, the axle of the knife 14 has the function to serve as a restriction backwards of the roll-out position when a new roll 1 is being inserted. For the sake of distinctness the knife and its mechanism have been omitted in Fig. 3.

An upper frame composed of the front portion 18 and the two side portions 19 will now be described. The side portions 19 are detachably attached to the upper arms 18´ of the front portion 18 in order to be placed in the same position relative to the frame side portions 4 at adaptation to different widths of the roll 1. At the centre of the front portion 18 the second half of the coupling 9 is attached which connects the lower frame 4,4,8 articulatedly with the upper frame 18, 19, 19. The two lower couplings 20 for the three-point suspension of the tractor are attached on the lower arms 18" of the front portion 18, the upper arm of which is connected to the coupling 21 of the central column 18"´ of the front portion. By operating the three-point suspension of the tractor so that the upper frame 18,19,19 and consequently the coupling 9 is raised and lowered to some extent the lower frame 4,4,8 can be adjusted to a suitable position relative to the ground surface. The lower frame 4,4,8 with the laying-out mechanism will then be supported with respect to the soil surface by the wheels of the tractor via the coupling 9 and, on the other hand, by the support wheels 10. Through lever actions the disturbing effect of bumps and irregularities in the vertical plane and the steering movements of the tractor in the horizontal plane will be essentially reduced.

At each side portion 19 there is attached a rail 22 with rear roll stops 23. These form together a store intended for additional rolls. By the inclination of the reails 22 in the working position the rolls are moved forwards after insertion until they are prevented by a stop means 24 which is pivotally mounted an a beam attached to the central column 18"´ and can be turned by the aid of a handle 24´. the stop means 24 is extensible to fit different roll diameters. In positioning the roll the step means 24 is lifted and a roll passes.The stop means 24 is thereafter released immediately, falls down and stops the other rolls in the store. The roll that has passed falls directly down into the roll-out position. The axle 2, the outer diameter of which is about 65% of the hole diameter of the roll is put through the axle holding means 3 and the roll 1 until the collar 5 stops. By lifting the end of the axle 2 somewhat the axle can be moved in a little further and lowered so that the collar 5 goes down behind the locking angle means 6 and fixes in this way the axle 2 with the roll 1. Under each end of the lower arms 18" there is attached a holding means 25 provided with a plurality of vertically distributed positions of an arm 26 vertically pivotable and resting in its lowermost position against a support 27 attached to the stop 12. Instead of the support 27 the arm 26 can be fixed to a chain which, in turn, is attached to the side portion 19. The length of the chain is adapted so that it supports the arm 26 in the lowermost position thereof, but is hanging loosely when the arm 26 is in its working position. Each arm 26 supports at its free end a plough member 28 which is attached to the arm 26 in such a way that it can be turned vertically as well as horizontally relative to the arm 26, and is then detachably fixed to this. Each plough member 28, moreover, is provided with a supporting surface 29 sliding against the soil surface and intended to give the plough member 28 an exact working depth relative to an often uneven ground surface and to absorb in this way an even soil swath for the anchorage of the soil covering material with the least possible quantity of soil. The supporting surface 29 can be vertically adjusted relative to the plough member 28 and turned in the vertical plane to a suitable angle after which it is detachably fixed to the plough member 28.

Figs. 1, 2 and 7; In each side portion 19 a lifting arm 30 is attached which passes downwards with a good free run and below a carrier 31 attached to each frame side portion 4. When a row of soil-covering material has been laid out and the material web 16 has been cut off the three-point suspension of the tractor is operated so that the upper frame 18,19,19 is lifted and lifts via the lifting arms 30 and the carriers 31 also the lower frame 4,4,8. Thanks to the slanting contact surfaces 30´ of the lifting arms 30 the lower frame 4,4,8 will slide automatically into a centered position irrespective of its position before the start of the lifting procedure. When the laying-out means is lowered again into working position above the next row the lower frame 4,4,8 will thus be centered and on a line with the tractor and the upper frame 18,19,19. The same effect can be achieved by means of two chains, one on each side, connecting the respective frames so that the chains are slack in the working position and permit the lower frame 4,4,8 to swing freely but which at lifting of the upper frame 18,19,19 are stretched and carry, lift, the lower frame 4,4,8. The chains are attached to the respective frames in the vicinity of the position of the above-mentioned components 30 and 31, and replace these.

---------------

0195760

## Patent Claims

1. A device for laying out a soil-covering material, said device being intended for connection to a tractor, characterized in that it is divided into an upper frame (18,19,19) supporting a ploughing means (28,29) and a store (22,23) for rolls (1) of a soil-covering material which both require power and are connected to the three-point suspension of the tractor, and a lower frame (4,4,8) supporting the laying-out mechanism which is connected to an articulated coupling (9), said frame being supported on the ground by a support wheel (10) at its end opposite to the coupling (9).

2. The device of claim 1, characterized in that the articulated coupling (9) is arranged as close to the rear shaft of the tractive tractor as possible.

3. The device of claim 1 or 2, characterized in that the ploughing means has a pivoting arm (26) pivotally connected to the lower arms (18") of the upper frame on each side of the material web (16) to be laid out, a plough member (28) and a supporting surface (29) being arranged at the other end of said pivoting arm (26).

4. The device of claim 3, characterized in that the pivoting arm (26) is freely pivotable relative to the lower arms (18") of the upper frame within such limits that the supporting surface (29) will slide on the soil surface when the soil-covering material is being laid out.

5. The device of claim 4, characterized in that the supporting surface (29) is arranged to be vertically adjustable relative to the plough member (28) in order to vary the penetration depth of the plough member into the soil and consequently also the amount of soil laid onto the material web (16).

6. The device of any one of the preceding claims, characterized in that lifting arms (30) are arranged at the two side portions (19) of the upper frame projecting downwards and under the frame side portions (4) of the lower frame in order to enable lifting of the lower frame (4,4,8), also, by operation of the upper frame (18,19,19).

7. The device of claim 6, characterized in that the lifting arms (30) comprise contact surfaces (30') slanting downwards and inwards towards each other for automatical
centration of the lower frame (4,4,8) at a lifting operation.

8. The device of any one of the preceding claims,
characterized in that the store holds several rolls of a soil-
covering material and is formed from rails (22), slanting
downwards and forwards towards the three-point suspension and
ending above the position that the roll is to enter when being
rolled out and that a releasable stop (24) is arranged at this
end of the rails (22) to prevent the rolls (1) in the store
from falling down unintentionally to the position where they
are rolled out.

9. The device of claim 8, characterized in that the
locking arm of the stop (24) is extensible to fit different
roll diameters.

10. The device of any one of the preceding claims,
characterized in that the roll (1) in its roll-out position is
carried along by means of an axle (2) through its centre via
axle holding means (3) adapted to permit the axle (2) and the
roll (1) to move freely vertically relative to the ground
within definite limits.

-------------

0195760

Fig. 1

Fig. 2

_Fig. 3_

_Fig. 4_

_Fig. 5_

_Fig. 6_

_Fig. 7_

Fig. 8

European Patent Office

**EUROPEAN SEARCH REPORT**

**0195760**
Application number

EP 86 85 0047

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | FR-A-2 452 871 (KUBOTA LTD.)<br>* claim 1, figures * | 1 | A 01 G 13/02 |
| | --- | | |
| A | US-A-3 161 163 (R.R. COSNER et al.)<br>* figures * | 1 | |
| | --- | | |
| A | US-A-2 890 665 (L.S.C. KANG)<br>* figure 2 * | 1 | |
| | ----- | | |

**TECHNICAL FIELDS SEARCHED (Int Cl 4)**

A 01 C 1/00
A 01 G 1/00
A 01 G 13/00

The present search report has been drawn up for all claims

| Place of search | Date of completion of the search | Examiner |
|---|---|---|
| BERLIN | 09-05-1986 | WUNDERLICH J E |